# EUROPEAN PATENT APPLICATION

(11) **EP 3 168 568 A1**
(43) Date of publication of application: **17.05.2017**
(21) Application number: 16198221.0
(22) Date of filing: 10.11.2016
(51) Int. Cl.: G01B 11/24, G01B 5/00

(54) **SYSTEMS AND METHODS FOR MONITORING COMPONENTS**

(30) Priority: 16.11.2015 US 201514942100
(71) Applicant: General Electric Company, Schenectady, NY 12345 (US)
(72) Inventor: NICKLES, Blake Ashton, Greenville, SC 29615 (US); BOJAPPA, Parvangada Ganapathy, Greenville, SC 29615 (US); GERMANN, Bryan J., Greenville, SC 29615 (US); BURNSIDE, Jason Lee, Greenville, SC 29615 (US); HOVIS, Gregory Lee, Greenville, SC 29615 (US)
(74) Representative: Foster, Christopher Michael

(57) **Abstract**

Systems (200) and methods (300) for monitoring components (10) are provided. A component (10) has an exterior surface (11) and a surface feature (40) configured on the component (10). A system (200) includes a data acquisition device (140) for analyzing the surface feature (40). The system (200) further includes an alignment assembly (210) for aligning the data acquisition device (140) and the surface feature (40). The alignment assembly (210) includes a target feature (212) configurable on the component (10) and a guide feature (214) configured with the data acquisition device (140). Alignment of the guide feature (214) with the target feature (212) aligns the data acquisition device (140) and the surface feature (40).

## Description

### FIELD OF THE INVENTION

The present disclosure relates generally to systems and methods for monitoring components, and more particularly to systems and methods which align data acquisition devices with surface features for monitoring the components.

### BACKGROUND OF THE INVENTION

Throughout various industrial applications, apparatus components are subjected to numerous extreme conditions (e.g., high temperatures, high pressures, large stress loads, etc.). Over time, an apparatus's individual components may suffer creep and/or deformation that may reduce the component's usable life. Such concerns might apply, for instance, to some turbomachines.

Turbomachines are widely utilized in fields such as power generation and aircraft engines. For example, a conventional gas turbine system includes a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of a turbomachine, various components (collectively known as turbine components) within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

Accordingly, components may be monitored for creep. One approach to monitoring components for creep is to configure strain sensors on the components, and analyze the strain sensors at various intervals to monitor for deformations associated with creep strain.

One concern when monitoring component deformation is the accuracy of strain sensor measurements taken during analysis of the strain sensors. As discussed, the strain sensors may be analyzed at various intervals. A data acquisition device may, for example, collect images of the strain sensors at various intervals for analysis. A particular concern is the accurate locating of the data acquisition device relative to the strain sensor when collecting images. It is generally desirable for the position of the data acquisition device to be consistently and repeatedly consistent relative to the strain sensors, such that measured changes in the strain sensors are accurate and not influenced by changes in the position of the data acquisition device.

The need for improved component monitoring is not limited to stain sensor applications. Such need exists in other component applications. For example, improved monitoring of cooling holes defined in the exterior surface of a component and/or other surface features configured on the exterior surface of a component may be useful.

Accordingly, alternative systems and methods for monitoring components are desired in the art. In particular, systems and methods which provide positioning consistency for data acquisition devices relative to surface features would be advantageous.

### BRIEF DESCRIPTION OF THE INVENTION

Aspects and advantages of the invention will be set forth in part in the following description, or may be obvious from the description, or may be learned through practice of the invention.

In accordance with one embodiment of the present disclosure, a system for monitoring a component is provided. The component has an exterior surface and a surface feature configured on the component. The system includes a data acquisition device for analyzing the surface feature. The system further includes an alignment assembly for aligning the data acquisition device and the surface feature. The alignment assembly includes a target feature configurable on the component and a guide feature configured with the data acquisition device. Alignment of the guide feature with the target feature aligns the data acquisition device and the surface feature.

In accordance with another embodiment of the present disclosure, a system for monitoring a component is provided. The component has an exterior surface and a surface feature configured on the component. The system includes a data acquisition device for analyzing the surface feature, the data acquisition device including a boroscope. The system further includes a physical alignment assembly for aligning the data acquisition device and the surface feature. The physical alignment assembly includes a target feature configurable on the component and a guide feature coupled to the boroscope. Alignment of the guide feature with the target feature aligns the data acquisition device and the surface feature along an X-axis, a Y-axis and a Z-axis.

In accordance with another embodiment of the present disclosure, a method for monitoring a component is provided. The method includes positioning a data acquisition device proximate a surface feature, the surface feature configured on the component. The method further includes aligning a guide feature of the data acquisition device with a target feature configured on the component. Alignment of the guide feature with the target feature aligns the data acquisition device and the surface feature.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a perspective view of an exemplary component comprising a plurality of surface features in accordance with one or more embodiments of the present disclosure;
FIG. 2 is a top view of an exemplary surface feature in accordance with one or more embodiments of the present disclosure;
FIG. 3 is a side partial cross-sectional view of a gas turbine in accordance with one or more embodiments of the present disclosure;
FIG. 4 is a cross-sectional view of a portion of a gas turbine in accordance with one or more embodiments of the present disclosure;
FIG. 5 is a perspective view of a system for monitoring a component, with a data acquisition device proximate a surface feature, in accordance with one or more embodiments of the present disclosure;
FIG. 6 is a cross-sectional view of a system for monitoring a component, with a data acquisition device aligned with a surface feature, in accordance with one or more embodiments of the present disclosure;
FIG. 7 is a perspective view of a system for monitoring a component, with a data acquisition device proximate a surface feature, in accordance with one or more embodiments of the present disclosure;
FIG. 8 is a cross-sectional view of a system for monitoring a component, with a data acquisition device aligned with a surface feature, in accordance with one or more embodiments of the present disclosure;
FIG. 9 is a front view, through a data acquisition device, of a surface feature and alignment assembly in accordance with one or more embodiments of the present disclosure; and
FIG. 10 is a flow chart illustrating a method in accordance with one or more embodiments of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

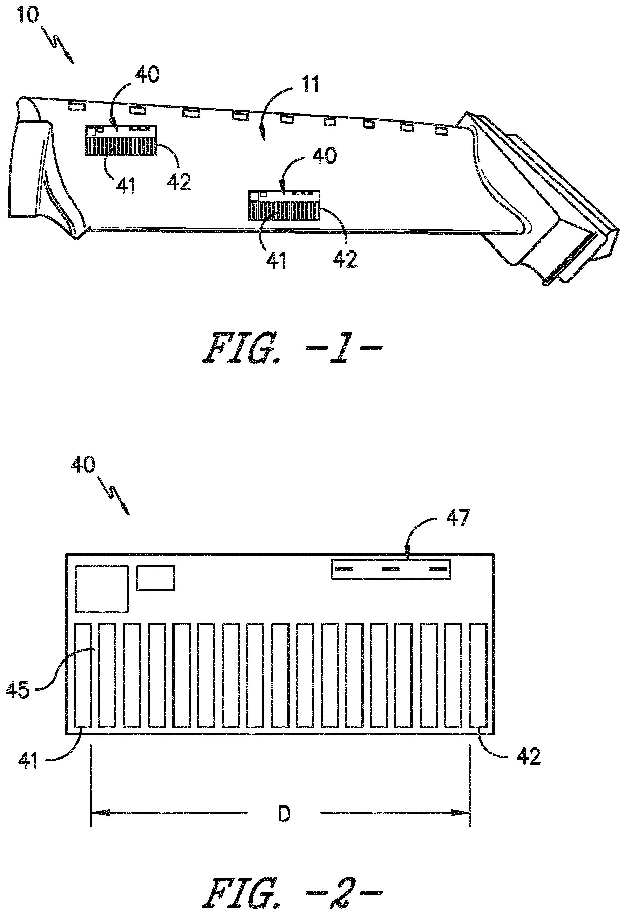

Referring now to FIG. 1, a component 10 is illustrated with plurality of surface features, in these embodiments strain sensors 40, configured thereon. The component 10 (and more specifically the substrate of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

The component 10 has an exterior surface 11 on or beneath which strain sensors 40 may be configured. Strain sensors 40 in accordance with the present disclosure may be configured on the exterior surface 11 using any suitable techniques, including deposition techniques; other suitable additive manufacturing techniques; subtractive techniques such as laser ablation, engraving, machining, etc.; appearance-change techniques such as annealing, direct surface discoloration, or techniques to cause local changes in reflectivity; mounting of previously formed strain sensors 40 using suitable mounting apparatus or techniques such as adhering, welding, brazing, etc.; or identifying pre-existing characteristics of the exterior surface 11 that can function as the components of a strain sensor 40. Additionally, in further alternative embodiments, strain sensors 40 can be configured beneath exterior surface 11 using suitable embedding techniques during or after manufacturing of the component 10.

Referring now to FIGS. 1 and 2, a strain sensor 40 generally comprises at least two reference points 41 and 42 that can be used to measure a distance D between said at least two reference points 41 and 42 at a plurality of time intervals. As should be appreciated to those skilled in the art, these measurements can help determine the amount of strain, strain rate, creep, fatigue, stress, etc. at that region of the component 10. The at least two reference points 41 and 42 can be disposed at a variety of distances and in a variety of locations depending on the specific component 10 so long as the distance D there between can be measured. Moreover, the at least two reference points 41 and 42 may comprise dots, lines, circles, boxes or any other geometrical or non-geometrical shape so long as they are consistently identifiable and may be used to measure the distance D there between.

The strain sensor 40 may comprise a variety of different configurations and cross-sections such as by incorporating a variety of differently shaped, sized, and positioned reference points 41 and 42. For example, as illustrated in FIG. 2, the strain sensor 40 may comprise a variety of different reference points comprising various shapes and sizes. Such embodiments may provide for a greater variety of distance measurements D such as between the outer most reference points (as illustrated), between two internal or external reference points, or any combination there between. The greater variety may further provide a more robust strain analysis on a particular portion of the component 10 by providing strain measurements across a greater variety of locations.

Furthermore, the values of various dimensions of the strain sensor 40 may depend on, for example, the component 10, the location of the strain sensor 40, the targeted precision of the measurement, application technique, and optical measurement technique. For example, in some embodiments, the strain sensor 40 may comprise a length and width ranging from less than 1 millimeter to greater than 300 millimeters. Moreover, the strain sensor 40 may comprise any thickness that is suitable for application and subsequent optical identification / measurement without significantly impacting the performance of the underlying component 10. Notably, this thickness may be a positive thickness away from the surface 11 (such as when additive techniques are utilized) or a negative thickness into the surface 11 (such as when subtractive techniques are utilized). For example, in some embodiments, the strain sensor 40 may comprise a thickness of less than from about 0.01 millimeters to greater than 1 millimeter. In some embodiments, the strain sensor 40 may have a substantially uniform thickness. Such embodiments may help facilitate more accurate measurements for subsequent strain calculations between the first and second reference points 41 and 42.

In some embodiments, the strain sensor 40 may comprise a positively applied square or rectangle wherein the first and second reference points 41 and 42 comprise two opposing sides of said square or rectangle. In other embodiments, the strain sensor 40 may comprise at least two applied reference points 41 and 42 separated by a negative space 45 (i.e., an area in which the strain sensor material is not applied). The negative space 45 may comprise, for example, an exposed portion of the exterior surface 11 of the component 10. Alternatively or additionally, the negative space 45 may comprise a subsequently applied contrasting (i.e. visually contrasting, contrasting in the ultraviolet or infrared spectrum, or contrasting in any other suitable range of wavelengths in the electromagnetic spectrum) material that is distinct from the material of the at least two reference points 41 and 42 (or vice versa).

As illustrated in FIG. 2, in some embodiments, the strain sensor 40 may include a unique identifier 47 (hereinafter "UID"). The UID 47 may comprise any type of barcode, label, tag, serial number, pattern or other identifying system that facilitates the identification of that particular strain sensor 40. In some embodiments, the UID 47 may additionally or alternatively comprise information about the component 10 or the overall assembly that the strain sensor 40 is configured on. The UID 47 may thereby assist in the identification and tracking of particular strain sensors 40, components 10 or even overall assemblies to help correlate measurements for past, present and future operational tracking.

The strain sensor 40 may thereby be configured in one or more of a variety of locations of various components 10. For example, as discussed above, the strain sensor 40 may be configured on a blade, vane, nozzle, shroud, rotor, transition piece or casing. In such embodiments, the strain sensor 40 may be configured in one or more locations known to experience various forces during unit operation such as on or proximate airfoils, platforms, tips or any other suitable location. Moreover, the strain sensor 40 may be configured in one or more locations known to experience elevated temperatures. For example, the strain sensor 40 may be configured on a hot gas path or combustion turbine component 10.

As discussed herein and as shown in FIG. 1, multiple strain sensors 40 may be configured on a single component 10 or on multiple components 10. For example, a plurality of strain sensors 40 may be configured on a single component 10 (e.g., a turbine blade) at various locations such that the strain may be determined at a greater number of locations about the individual component 10. Alternatively or additionally, a plurality of like components 10 (e.g., a plurality of turbine blades) may each have a strain sensor 40 configured in a standard location so that the amount of strain experienced by each specific component 10 may be compared to other like components 10. In even some embodiments, multiple different components 10 of the same assembly (e.g., blades and vanes for the same turbine in turbine component embodiments) may each have a strain sensor 40 configured thereon so that the amount of strain experienced at different locations within the overall assembly may be determined.

It should be understood that the present disclosure is not limited to strain sensors 40 as illustrated herein. Rather, any suitable surface feature configured on a turbine component 10, such as on the exterior surface 11 thereof, is within the scope and spirit of the present disclosure. Examples of other suitable surface features include cooling holes defined in the exterior surface, coating layers applied to the exterior surface 11 (wherein the exterior surface 11 is defined as that of a base component of the turbine component 10), etc.

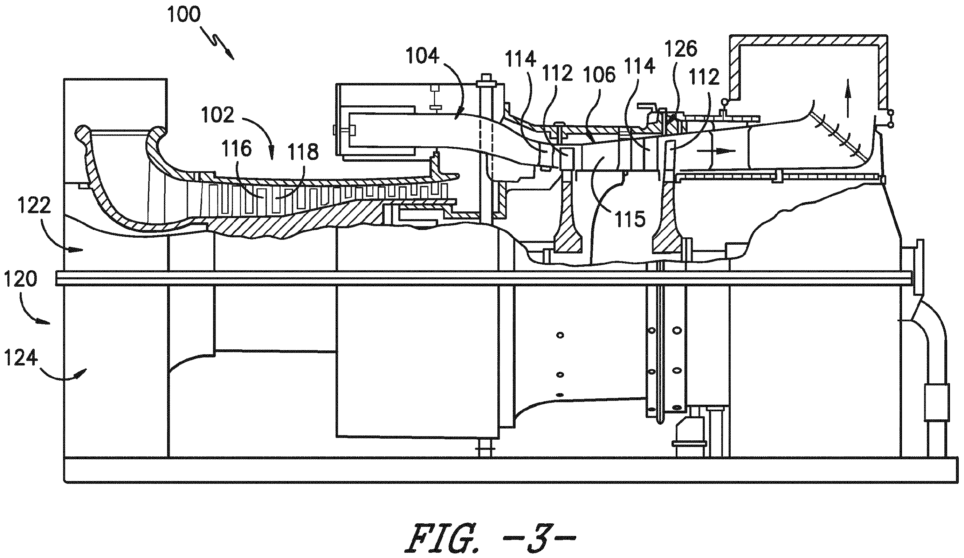

Referring now to FIG. 3, a component 10 (with one or more surface features 40 configured thereon) may be disposed for operation within a turbomachine, such as a gas turbine 100 as illustrated, steam turbine, or other turbomachine. Gas turbine 100 may include a compressor section 102, a combustor section 104, and a turbine section 106. Generally, the compressor section 102 provides a flow of pressurized air to the combustor section 104 wherein the pressurized air is mixed with fuel and the mixture combusted to generate a working fluid or hot gas stream. The working fluid is flowed through the turbine section 106, causing rotation of various rotatable components within the turbine section 106, which in turn drives the compressor section 102 (and rotation of various rotatable components thereof). As shown, the turbine section 106 includes one or more stages of rotor blades 112 and stator vanes 114 which extend radially across a hot gas stream flow annulus 115. Compressor section 102 additionally includes one or more stages of rotor blades 116 and stator vanes 118. A casing 120 extends around and encloses the compressor section 102, combustor section 104 and turbine section 106. As illustrated, the casing 120 may be formed from two or more sections. In the embodiment shown, the casing includes a first shell 122 and a second shell 124 which form the casing 120.

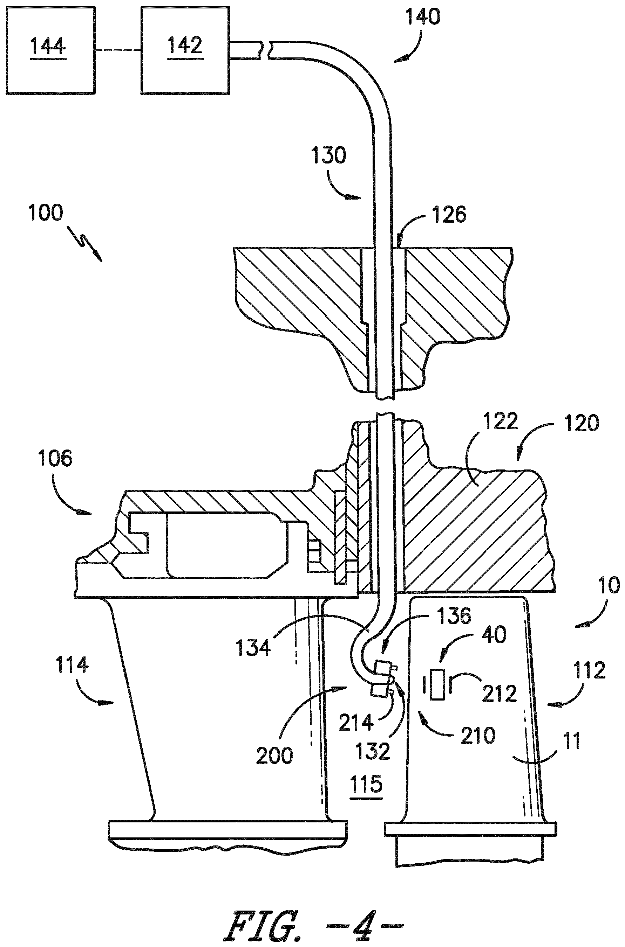

The casing 120 may include defined therein one or more access ports 126 to permit periodic inspection of components of the gas turbine 100 disposed internally of the casing 120 using a borescope 130 (see FIG. 4). As is generally understood, during operation of the gas turbine each of the ports 126 is closed by a suitable plug.

Referring now to FIG. 4, a borescope 130 may extend through an access port 126 of the gas turbine casing 120 for inspection of components of the gas turbine 100. The borescope 130 may generally include a lens 132 and a suitable optical system for transmitting images therethrough to a processor, as discussed herein. The optical system may be contained within a body 134 of the borescope, which may for example be generally flexible and movable within the gas turbine casing 120 to facilitate viewing of the various components of the gas turbine 100. A collar 136 may surround a portion of the body 134, such as proximate the lens 132. The collar 136 may support alignment features as discussed herein.

Borescope 130 may be a component of a data acquisition device 140, which may generally be utilized to analyze surface features 40. A data acquisition device 140 may, for example, include borescope 130, an image capture device 142 and a computing device 144. The image capture device 142 may generally be in communication with the lens 132 and optical system for receiving and processing light from the lens 132 to generate images. In exemplary embodiments, for example, image capture device 142 may be a camera sensor which receives and processes light from a camera lens to generate images, such as digital images, as is generally understood.

Image capture device 142 may be in communication with computing device 144. Computing device 144 may generally include suitable hardware and/or software for storing and analyzing the images from the image capture device 142 and device 140 generally. Such hardware and/or software may, for example, generally analyze surface features. For example, strain sensors 40 may be analyzed to determine whether deformation and strain have occurred as discussed above.

Computing device 144 may include one or more processor(s) and associated memory device(s) configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) may generally be configured to store suitable computer-readable instructions that, when implemented by the processor(s), configure the computing device 144 to perform various functions.

In alternative embodiments, other suitable data acquisition devices, such as electrical field scanners or devices which include other suitable imaging apparatus, may be utilized.

Notably, analysis of a component 10 (such as a rotor blade 112, 116 or other suitable component as discussed herein) by a data acquisition device 140 may, in some embodiments, be performed when the component 10 is in situ. A component 10 is in situ when it disposed within an assembly such as a turbomachine, such as within a section 102, 104, 106 of the gas turbine 100. Notably, in some embodiments the entire casing 120 may surround the component 10 when such in situ analysis is occurring. In these embodiments, analysis may occur via extension of a portion of the data acquisition device 140, such as a portion of the boroscope 130 including the lens 132, through a port 126. In other embodiments, a portion of the casing 120, such as the first shell 122 or second shell 124, may be removed. Alternatively, the component 10 may be removed from the assembly, such as the turbomachine, for analysis, and may for example be positioned in a measurement jig for analysis.

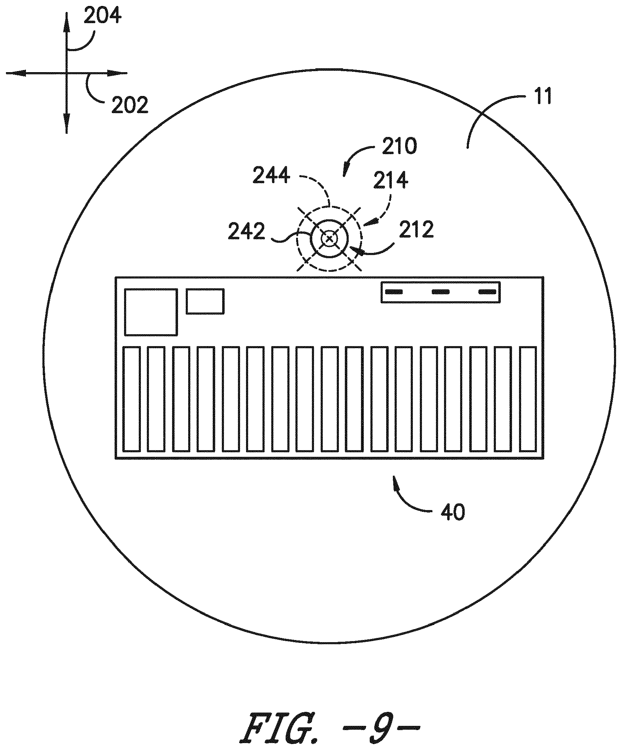

Referring now to FIGS. 4 through 9, the present disclosure is further directed to systems 200 for monitoring components 10. A system 200 may include, for example, a surface feature 40 as discussed herein and a data acquisition device 140 for analyzing the surface feature 40 as discussed herein. In order to analyze the surface feature 40, it is desirable for the data acquisition device 140 to be aligned with the surface feature 40 such that accurate images of the surface feature 40 can be received and analyzed by the data acquisition device 140. It is particularly desirable for the position of the data acquisition device 140 when aligned with the surface feature 40 to be repeatable, such as repeatable along an X-axis 202, Y-axis 204 and Z-axis 206 (which may be mutually orthogonal as is generally understood). Such repeatability and consistency reduces or eliminates inaccuracies in measured changes in the surface feature 40 due to changes in the position of the data acquisition device 140 relative to the surface feature 40, thus increasing the accuracy of the surface feature 40 analysis and, in some embodiments, deformation 10 monitoring.

Accordingly, system 200 may further include one or more alignment assemblies 210 for aligning the data acquisition device 140 and the surface feature 40. Alignment assemblies 210 may provide alignment repeatability, such as in at least one of the X-axis 202, Y-axis 204 or Z-axis 206, such as in at least two of the X-axis 202, Y-axis 204 or Z-axis 206, such as in the X-axis 202, Y-axis 204 and Z-axis 206. The alignment assemblies 210 may facilitate repeated, accurate alignment of the data acquisition device 140, such as the lens 132 thereof, with the surface feature 40 for image analysis thereof.

An alignment assembly 210 may include a target feature 212 and a guide feature 214. The target feature 212 may be configurable on the component 10, and may for example be proximate the surface feature 40. For example, in some embodiments, the target feature 212 may be separate and spaced from the surface feature 40. Alternatively, the target feature 212 may be included in the surface feature 40. The guide feature 214 may be configured with the data acquisition device 140. Alignment of the guide feature 214 with the target feature 212 may align the data acquisition device 140 (such as the lens 132 thereof) with the surface feature 40, such as along at least one of the X-axis 202, Y-axis 204 or Z-axis 206, such as along at least two of the X-axis 202, Y-axis 204 or Z-axis 206, such as along the X-axis 202, Y-axis 204 and Z-axis 206. An alignment assembly 210 may thus act as a poka-yoke for alignment of the data acquisition device 140 with the surface feature 40.

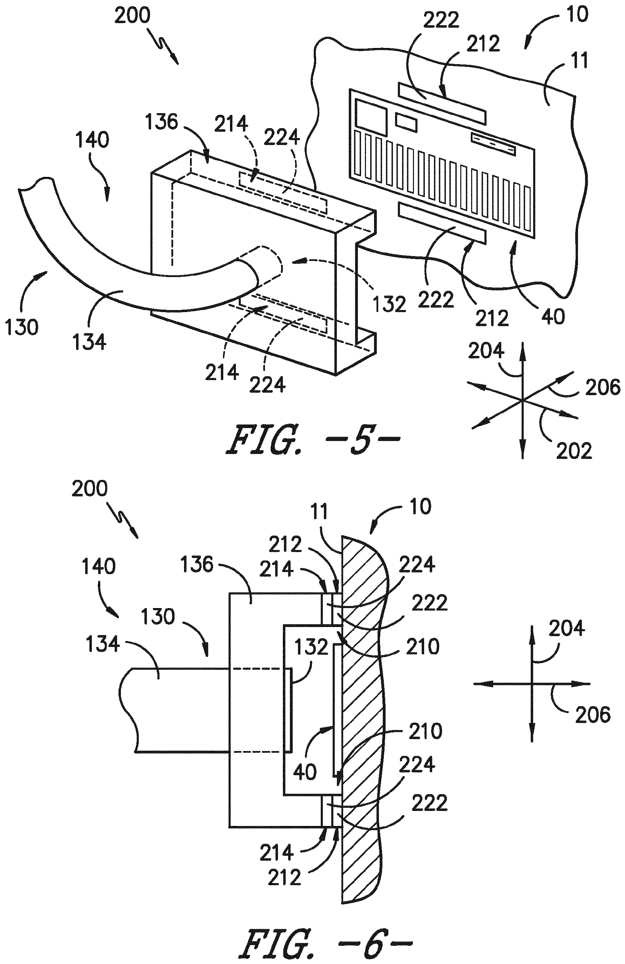

In some embodiments, as illustrated in FIGS. 5 through 8, the alignment assembly 210 is a physical alignment assembly. Accordingly, physical contact between the guide feature 214 and the target feature 212 may cause alignment of the data acquisition device 140 and the surface feature 40, such as along the at least one of the X-axis 202, the Y-axis 204 or the Z-axis 206. In these embodiments, the guide feature 214 may for example be coupled to (such as fixidly connected to), the data acquisition device 140 (such as the boroscope 130 and/or lens 132 thereof). For example, the guide feature 214 may be configured on the collar 136.

For example, in some embodiments as illustrated in FIGS. 5 and 6, the target feature 212 may be or include a first magnet 222. For example, first magnet 222 may extend from the exterior surface 11, be flush with the exterior surface 11, or be embedded in the component 10 below the exterior surface 11. The first magnet 222 may have a first polarity. Further, the guide feature 214 may be a mating second magnet 224 which is coupled to the data acquisition device 140, such as to the boroscope 130 and/or lens 132 thereof. For example, second magnet 224 may extend from an exterior surface of the collar 136, be flush with the exterior surface, or be embedded in the collar 136 below the exterior surface. The guide feature 214 may have a second opposite magnetic polarity relative to the first magnetic polarity. Accordingly, when the magnets 222, 224 are brought into proximity of each other, they may be attracted to each other and may be pulled towards each other until they snap into contact with each other and are thus aligned with each other.

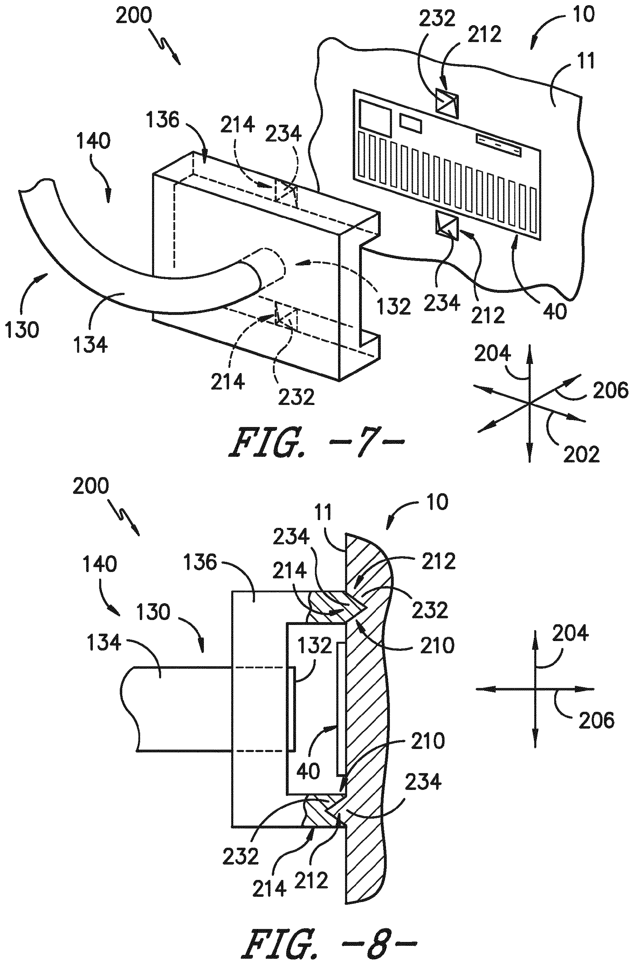

In other embodiments as illustrated in FIGS. 7 and 8, the target feature 212 may be or include one of a depression 232 or a protrusion 234, and the guide feature 214 may be or include the mating other of the depression or the protrusion 234. The outer surface of the protrusion 234 may have a size and shape that corresponds to the inner surface of the depression 232. When the protrusion 234 contacts and is seated in the depression 232, the protrusion 234 and depression 232 may be aligned. In some embodiments, the depression 232 may be defined in the component 10, and may thus extend from the exterior surface 11 into the component 10, and the protrusion 234 may be coupled to the data acquisition device 140 (such as the borescope 130 and/or lens 132 thereof). For example, the protrusion 234 may extend from the collar 136. In other embodiments, the protrusion 234 may extend from the component 10, such as from the exterior surface 11 thereof, and the depression 232 may be coupled to the data acquisition device 140 (such as the borescope 130 and/or lens 132 thereof). For example, the depression 232 may be defined in the collar 136.

As discussed, the outer surface of the protrusion 234 may have a size and shape that corresponds to the inner surface of the depression 232. For example, in some embodiments as shown, the depression 232 may have a taper and the protrusion 234 may have a mating taper. For example, the one of the depression 232 or protrusion 234 configured on the component 10 may taper away from the exterior surface 11, such as away from the component 10 or into the component 10. The other of the depression 232 or protrusion 234 may have a mating taper. The tapers may facilitate seating of the protrusion 234 within the depression 232 and the resulting alignment of the protrusion 234 and depression 232.

It should be understood that physical alignment assemblies 210 in accordance with the present disclosure are not limited to the above disclosed embodiments. Rather, any suitable physically mating components may be utilized as a target feature 212 and guide feature 214 in accordance with the present disclosure.

In alternative embodiments, an alignment assembly 210 may be an optical alignment assembly. In these embodiments, the guide feature 214 need not contact the target feature 212 to align the guide feature 214 and target feature. For example, the target feature 212 may be a fiducial 242 that provides a focal point for the data acquisition device 140. In the embodiment shown, the fiducial 242 is in the shape of a conventional target. The guide feature 214 may in some embodiments be a mating fiducial 244 which may comprise, for example, markings in or on the lens 232. The fiducial 242 may be visually overlayed with the fiducial 244 to align the fiducials 242, 244. Alternatively, the guide feature 214 may comprise a focusing function of the data acquisition device 140, such as of the computing device 144 thereof. Bringing the fiducial 242 into focus may align the guide feature 214 and target feature 212.

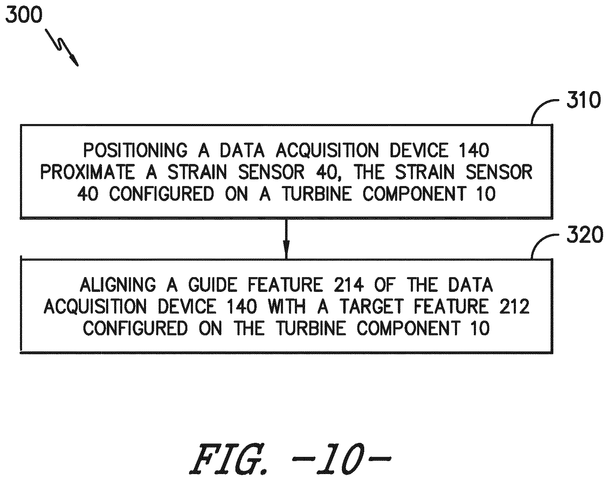

Referring now additionally to FIG. 10, the present disclosure is further directed to methods for monitoring components 10. A method 300 may include, for example, the step 310 of positioning a data acquisition device 140 proximate a surface feature 40 as discussed herein. The surface feature 40 may be configured on a component 10. A method 300 may further include, for example, the step 320 of aligning a guide feature 214 of the data acquisition device 140 with a target feature 212 configured on the component 10, as discussed herein. Alignment of the guide feature 214 with the target feature 212 may align the data acquisition device 140 and the surface feature 40, such as along at least one of an X-axis 202, a Y-axis 204 or a Z-axis 206, as discussed herein.

In some embodiments, steps 310, 320 may occur with the component 10 in situ, as discussed herein. In other embodiments, steps 310, 320 may occur with the component 10 removed from an associated assembly, such an associated turbomachine, as discussed herein.

In some embodiments, step 320 may include physically aligning the guide feature 214 with the target feature 212, as discussed herein. In these embodiments, the target feature 212 may for example contact the guide feature 214 during and to cause alignment thereof. In other embodiments, step 320 may include optically aligning the guide feature 214 with the target feature 212, as discussed herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system (200) for monitoring a component (10), the component (10) having an exterior surface (11) and a surface feature (40) configured on the component (10), the system (200) comprising:
a data acquisition device (140) for analyzing the surface feature (40); and
an alignment assembly (210) for aligning the data acquisition device (140) and the surface feature (40), the alignment assembly (210) comprising a target feature (212) configurable on the component (10) and a guide feature (214) configured with the data acquisition device (140), wherein alignment of the guide feature (214) with the target feature (212) aligns the data acquisition device (140) and the surface feature (40).

2. The system (200) of claim 1, wherein the target feature (212) is separate from the surface feature (40).

3. The system (200) of any of claims 1-2, wherein the alignment assembly (210) is a physical alignment assembly (210).

4. The system (200) of claim 3, wherein contact between the guide feature (214) and the target feature (212) causes alignment of the data acquisition device (140) and the surface feature (40).

5. The system (200) of any of claims 1-4, wherein the target feature (212) is a first magnet (222) and the guide feature (214) is a mating second magnet (224) having an opposite magnetic polarity relative to the first magnet (222).

6. The system (200) of any of claims 1-4, wherein the target feature (212) is one of a depression (232) or a protrusion (234) and the guide feature (214) is the other of the depression (232) or the protrusion (234).

7. The system (200) of claim 1, wherein the alignment assembly (210) is an optical alignment assembly (210) and the target feature (212) provides a focal point for the data acquisition device (140).

8. The system (200) of any of claims 1-7, wherein alignment of the guide feature (214) with the target feature (212) aligns the data acquisition device (140) and the surface feature (40) along at least one of an X-axis (202), a Y-axis (204) and a Z-axis (206).

9. The system (200) of any of claims 1-8, wherein the data acquisition device (140) comprises a boroscope (130).

10. The system (200) of claim 10, wherein the guide feature (214) is coupled to the boroscope (130).

11. A method (300) for monitoring a component (10), the method (300) comprising:
positioning a data acquisition device (140) proximate a surface feature (40), the surface feature (40) configured on the component (10);
aligning a guide feature (214) of the data acquisition device (140) with a target feature (212) configured on the component (10), wherein alignment of the guide feature (214) with the target feature (212) aligns the data acquisition device (146) and the surface feature (40).

12. The method (300) of claim 11, wherein the positioning and aligning steps (310, 320) occur with the component (10) in situ.

13. The method (300) of claim 11, wherein aligning the guide feature (214) with the target feature (212) comprises physically aligning the guide feature (214) with the target feature (212).

14. The method (300) of claim 13, wherein aligning the guide feature (214) with the target feature (212) comprises contacting the target feature (212) with the guide feature (214).

15. The method (300) of claim 11, wherein aligning the guide feature (214) with the target feature (212) comprises optically aligning the guide feature (214) with the target feature (212).
